# EUROPÄISCHE PATENTSCHRIFT

(11) **EP 0 887 578 B1**
(45) Veröffentlichungstag und Bekanntmachung des Hinweises auf die Patenterteilung: **12.01.2005**
(21) Anmeldenummer: 98105820.9
(22) Anmeldetag: 31.03.1998
(51) Int. Cl.: F16J 15/32

(54) **Dichtungsanordnung**
Seal assembly
Dispositif d'étanchéité

(30) Priorität: 23.06.1997 DE 19726433
(43) Veröffentlichungstag der Anmeldung: 30.12.1998
(73) Patentinhaber: Carl Freudenberg KG, 69469 Weinheim (DE)
(72) Erfinder: Freitag, Edgar, Dr., 34613 Schwalmstadt (DE); Siegrist, Uwe, 34633 Ottrau (DE); Braun, Otmar, 34621 Frielendorf (DE)

(56) Entgegenhaltungen:
- EP-A- 0 204 110
- US-A- 3 785 660
- US-A- 5 511 886

## Beschreibung

Die Erfindung betrifft eine Dichtungsanordnung, nach dem Oberbegriff des Anspruchs 1.

Eine Dichtungsanordnung der vorstehend genannten Art ist aus DE 38 30 706 A 1 bekannt. Der Dichtring besteht aus einem Versteifungsring und einem damit verbundenen Lippenring, wobei der Lippenring eine Staurippe aufweist, die radial in Richtung der abzudichtenden Fläche vorspringt und diese sinusförmig verlaufend und ineinander übergehend umschließt.

Der Erfindung liegt die Aufgabe zugrunde eine Dichtungsanordnung bereitzustellen, welche eine verbesserte Schmierung der abzudichtende Fläche und eine Verlängerung der Gebrauchsdauer einer solchen Dichtungsanordnung ermöglicht.

Diese Aufgabe wird erfindungsgemäß mit den Merkmalen von Anspruch 1 gelöst. Auf vorteilhafte Ausgestaltungen nehmen die Unteransprüche bezug.

Bei der erfindungsgemäßen Dichtungsanordnung ist der ersten Dichtlippe auf der dem abzudichtenden Raum abgewandten Seite mit axialem Abstand benachbart eine zweite Dichtlippe zugeordnet, die sich parallel zur ersten Dichtlippe erstreckt und mit der ersten Dichtlippe und der abzudichtenden Fläche einen Hohlraum begrenzt, der mit einem Sperrfett befüllt ist. Hierbei ist von Vorteil, daß zur Schmierung der ersten Dichtlippe und ihrer Lauffläche auf der Welle primär das in dem Hohlraum befindliche Sperrfett und nicht das abzudichtende Medium dient. Unabhängig davon, ob das abzudichtende Medium für eine Verringerung der Reibung und somit des Verschleißes zwischen der ersten Dichtlippe und der abzudichtenden Fläche geeignet ist, weist die Dichtungsanordnung durch das im Hohlraum befindliche Sperrfett gleichbleibend gute Gebrauchseigenschaften während einer langen Gebrauchsdauer auf.

Ferner wird auch bei Stillstand der relativ zueinander bewegbaren Teile das abzudichtende Medium innerhalb des abzudichtenden Raums sicher zurückgehalten wird. Bei Inbetriebnahme der Dichtung wird die erste Dichtlippe von Beginn an durch das Sperrfett innerhalb des Hohlraums geschmiert. Dadurch, daß der Hohlraum, ebenso wie die erste und die zweite Dichtlippe in axialer Richtung im wesentlichen sinusförmig gewellt ausgebildet ist, erfolgt eine Umwälzung des Sperrfetts in sich selbst, so daß Anbackungserscheinungen im Bereich der ersten Dichtlippe sicher ausgeschlossen sind.

Der Dichtring weist ferner die Form eines Nutrings auf ist und als Stangen- oder Kolbendichtring ausgebildet. Von entscheidender Wichtigkeit ist, daß der Dichtring nur im Bereich seiner ersten und zweiten Dichtlippe dynamisch beansprucht ist. In seinem Einbauraum, beispielsweise in einer in Richtung der abzudichtenden Fläche offenen Nut, ist der Dichtring demgegenüber unverdrehbar angeordnet, um einen Verschleiß/ eine Beschädigung der statisch beanspruchten dritten Dichtlippe zu vermeiden. Gelangt der Dichtring beispielsweise als Stangendichtung zur Anwendung, ist er in der Nut eines die Stange mit radialem Abstand umschließenden Gehäuses angeordnet. Gelangt er demgegenüber als Kolbendichtring zur Anwendung, ist er in einer radial nach außen offenen Nut eines Kolbens unverdrehbar angeordnet und berührt mit seiner ersten und zweiten Dichtlippe eine Zylinderwand, die den Kolben außenumfangsseitig mit radialem Abstand umschließt.

Bei dem als Nutring ausgebildet, zu Dichtring ist auf der der ersten Dichtlippe radial gegenüberliegenden Seiten eine statisch beanspruchte dritte Dichtlippe angeordnet, die den Nutgrund einer Nut unter elastischer Vorspannung dichtend berührt. Bei einer Druckbeaufschlagung des Dichtrings wird die Anpressung aller Dichtlippen an die jeweils abzudichtenden Flächen erhöht. Ferner ist auf der dem abzudichtenden Raum abgewandten Seite der zweiten Dichtlippe ein Backring aus polymerem Werkstoff angeordnet ist, um eine Spaltextrusion zu vermeiden und die Reibung zu reduzieren wenn die gegeneinander abzudichtenden Maschinenelemente relativ zueinander translatorisch hin- und herbewegbar, rotatorisch oder rotatorisch schwenkend bewergbar sind. Der Backring besteht bevorzugt aus Polytetrafluorethylen.

Die erfindungsgemäße Ausgestaltung der Dichtungsanordnung ist insbesondere dann von Vorteil, wenn der Dichtring als Drehdruckdichtung ausgebildet ist und beispielsweise in Schwenkantrieben oder Lenkeinheiten von Traktoren oder Lastkraftwagen zur Anwendung gelangt. Drehdruckdichtringe sind oftmals Drücken von mehr als 50 bar ausgesetzt; die meisten Radialwellendichtringe sind für derart hohe Drücke nicht geeignet.

Um eine gute Formbeständigkeit des Dichtringes auch bei Druckbeaufschtagungen von mehr als 50 bar zu gewährleisten, ist von Vorteil, wenn dieser einen in Richtung der Hochdruckseite offenen, im wesentlichen C-förmigen Querschnitt aufweist.

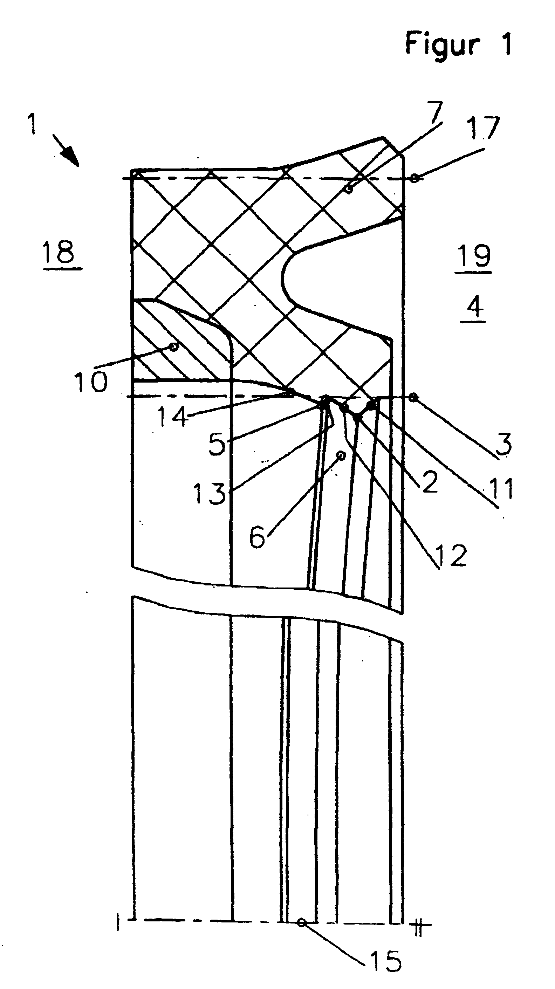

Die erfindungsgemäße Dichtungsanordnung wird nachfolgend anhand der Figur 1 näher erläutert. Diese zeigt in vergrößerter, halbgeschnittener und schematischer Darstellung:
Figur 1 ein Ausführungsbeispiel der erfindungsgemäßen Dichtungsanordnung.

In Figur 1 ist ein Ausführungsbeispiel einer erfindungsgemäßen Dichtungsanordnung gezeigt. Der gezeigte Dichtring 1 besteht im wesentlichen aus elastomerem Werkstoff und ist mit einer dynamisch beanspruchten ersten Dichtlippe 2 versehen. Die Dichtlippe 2 umschließt die schematisch mit einer Strichpunktlinie dargestellte abzudichtende Fläche 3 unter elastischer Vorspannung, wobei die abzudichtende Fläche 3 in dem hier gezeigten Ausführungsbeispiel die Oberfläche einer translatorisch und/ oder rotatorisch bewegbaren Stange bildet und der Dichtring 1 in einer hier nicht dargestellten, in Richtung der abzudichtenden Fläche 3 offenen Nut eines Gehäuses angeordnet ist.

Die erste Dichtlippe 2 ist in axialer Richtung im wesentlichen sinusförmig gewellt ausgebildet, so daß die abzudichtende Fläche 3 von der ersten Dichtlippe 2 sinusförmig berührt ist.

Parallel zur ersten Dichtlippe 2 erstreckt sich die zweite Dichtlippe 5, die der ersten Dichtlippe 2 auf der dem abzudichtenden Raum 4 abgewandten Seite mit axialem Abstand benachbart zugeordnet ist. Die erste 2 und die zweite Dichtlippe 5 sind jeweils durch zwei einander durchschneidende Kegelflächen 11, 12; 13, 14 begrenzt, wobei die dem abzudichtenden Raum 4 zugewandten Kegeflächen 11, 13 mit der Dichtungsachse 15 einen größeren Winkel einschließen als die dem abzudichtenden Raum 4 abgewandten Kegelflächen 12, 14. Die erste Dichtlippe 2, die zweite Dichtlippe 5 und die abzudichtende Fläche 3 begrenzen einen Hohlraum 6, der mit einem Sperrfett befüllt ist. Dadurch, daß die erste Dichtlippe 2, die zweite Dichtlippe 5 und der mit dem Sperrfett befüllte Hohlraum 6 die abzudichtende Fläche 3 sinusförmig verlaufend umschließen und die erste und zweite Dichtlippe 2, 5 die Fläche anliegend berühren, ergibt sich eine Rückförderwirkung des abzudichtenden Mediums in Richtung des abzudichtenden Raums 4. Im Bereich der dynamischen Abdichtungszonen zwischen der ersten und zweiten Dichtlippe 2, 5 sowie der abzudichtenden Fläche 3 ergibt sich durch das Sperrfett ein durchgehender, in sich geschlossener Schmierfilm, so daß abrasiver Verschleiß sowohl am Elastomerwerkstoff des Dichtrings 1 als auch auf der abzudichtenden Fläche 3 nur vernachlässigbar gering ist.

Die erzielte Dichtwirkung ist unabhängig von der relativen Drehrichtung der abzudichtenden Fläche. Eine universelle Verwendung ist problemlos möglich.

Der in Figur 1 gezeigte Dichtring ist als Drehdruckdichtring ausgebildet und gelangt in Lenkeinheiten von Nutzfahrzeugen zur Anwendung. Drücke innerhalb des abzudichtenden Raums 4 von zumindest 50 bar können problemlos abgedichtet werden.

Der Dichtring 1 nach Fig. 1 ist als Nutring ausgebildet. Der Dichtring 1 ist in eine in Richtung der abzudichtenden Fläche 3 offene Nut eines hier nicht dargestellten Gehäuses eingeschnappt, wobei der Nutgrund mit der Bezugsziffer 17 bezeichnet ist. Der gezeigte Dichtring 1 ist im nichteingebauten Zustand dargestellt. Der Dichtring 1 weist auf der der ersten Dichtlippe 2 radial gegenüberliegenden Seite eine statisch beanspruchte dritte Dichtlippe 7 auf. Außerdem ist der Dichtring mit einem Backring 10 versehen, um bei Druckbeaufschlagung eine Spaltextrusion des elastomeren Werkstoffs in Richtung der Niederdurckseite 18 und dadurch eine Beschädigung des Dichtrings 1 zu vermeiden. Der Backring 10 besteht in diesem Ausführungsbeispiel aus Polytetrafluorethylen.

Der Backring 10 dient desweiteren zur Reibungsreduzierung zwischen dem Dichtring 1 und der abzudichtenden Fläche 3.

## Patentansprüche

1. Dichtungsanordnung, umfassend einen Dichtring (1) mit zumindest einer dynamisch beanspruchten ersten Dichtlippe aus elastomerem Werkstoff, die eine abzudichtende Fläche (3) unter elastischer Vorspannung dichtend berührt, und in axialer Richtung im wesentlichen sinusförmig gewellt ausgebildet ist, sowie einer auf der dem abzudichtenden Raum (4) abgewandten Seite mit axialem Abstand benachbart angeordneten zweiten Dichtlippe (5), die sich parallel zur ersten Dichtlippe (2) erstreckt, und mit der ersten Dichtlippe (2) und der abzudichtenden Fläche (3) einen Hohlraum begrenzt, **dadurch gekennzeichnet, daß** der Hohlraum mit Sperrfett befüllt ist, der Dichtring (1) die Form eines Nutrings aufweist, und als Stangenoder Kolbendichtring ausgebildet ist, auf der der ersten Dichtlippe (2) radial gegenüberliegenden Seite eine statisch beanspruchte dritte Dichtlippe angeordnet ist, die den Nutgrund (17) einer Nut unter elastischer Vorspannung dichtend berührt, und dass auf der dem abzudichtenden Raum (4) abgewandten Seite der zweiten Dichtlippe ein Backring (10) aus polymerem Werkstoff angeordnet ist.

2. Dichtungsanordnung nach Anspruch 1, **dadurch gekennzeichnet, dass** der Dichtring (1) als Drehdruckdichtring ausgebildet ist.

3. Dichtungsanordnung nach einem der Ansprüche 1 oder 2, **dadurch gekennzeichnet, dass** der Dichtring (1) einen in Richtung der Hochdruckseite (19) offenen, im wesentlich C-förmigen Querschnitt aufweist.

## Claims

1. A sealing arrangement comprising a sealing ring (1) having at least one dynamically stressed first sealing lip which is made of elastomeric material, comes into contact in a sealing manner, under elastic prestressing, with a surface (3) which is to be sealed, and is of essentially sinusoidally undulating design in the axial direction, and having a second sealing lip (5) which is arranged adjacent to, and at an axial distance from, the first, on the side directed away from the space (4) to be sealed, extends parallel to the first sealing lip (2) and, with the first sealing lip (2) and the surface (3) which is to be sealed, bounds a cavity, **characterized in that** the cavity is filled with barrier grease, the sealing ring (1) is in the form of a grooved ring, and is designed as a rod-sealing or piston-sealing ring, and arranged on the side which is located radially opposite the first sealing lip (2) is a statically stressed third sealing lip which comes into contact in a sealing manner, under elastic prestressing, with the base (17) of a groove, and **in that** a backing ring (10) made of polymeric material is arranged on that side of the second sealing lip which is directed away from the space (4) which is to be sealed.

2. A sealing arrangement according to claim 1, **characterized in that** the sealing ring (1) is designed as a rotary pressure sealing ring.

3. A sealing arrangement according to either of claims 1 and 2, **characterized in that** the sealing ring (1) has an essentially C-shaped cross section which is open in the direction of the high-pressure side (19).

## Revendications

1. Dispositif d'étanchéité comprenant une bague d'étanchéité (1) avec au moins une première lèvre d'étanchéité en matière élastomère à sollicitation dynamique qui étanchéifie par contact une surface à étanchéifier (3) sous une précontrainte élastique et qui est formée avec des ondulations essentiellement sinusoïdales en direction axiale, et avec une seconde lèvre d'étanchéité (5) disposée à proximité à distance axiale, sur le côté opposé à l'espace devant être étanchéifié (4), qui s'étend parallèle à la première lèvre d'étanchéité (2) et qui, avec la première lèvre d'étanchéité (2) et la surface à étanchéifier (3) délimite une cavité, **caractérisé en ce que** la cavité est remplie de graisse faisant barrage, que la bague d'étanchéité (1) présente la forme d'un joint à gorge et qu'elle est conçue en tant que bague d'étanchéité pour une barre ou pour un piston, qu'une troisième lèvre d'étanchéité à sollicitation statique, qui est en contact d'étanchéité avec le fond (17) d'une rainure sous précontrainte élastique, est disposée sur le côté radialement opposé à la première lèvre d'étanchéité (2), et **en ce qu'**une bague de retenue (10) en matière polymère est disposée sur le côté opposé à l'espace à étanchéifier (4) de la seconde lèvre d'étanchéité.

2. Dispositif d'étanchéité selon la revendication 1, **caractérisé en ce que** la bague d'étanchéité (1) est conçue en tant que bague d'étanchéité « tourner-pousser ».

3. Dispositif d'étanchéité selon l'une quelconque des revendications 1 ou 2, **caractérisé en ce que** la bague d'étanchéité (1) présente une section transversale sensiblement en forme de C, ouverte en direction du côté haute pression (19).
